# EUROPÄISCHE PATENTSCHRIFT

(11) **EP 1 318 865 B1**
(45) Veröffentlichungstag und Bekanntmachung des Hinweises auf die Patenterteilung: **12.05.2004**
(21) Anmeldenummer: 00954249.9
(22) Anmeldetag: 05.09.2000
(51) Int. Cl.: B01D 29/15, B01D 29/68, B01D 35/16

(54) **VORRICHTUNG ZUR FILTRATION VON VERUNREINIGTER FLÜSSIGKEIT, INSBESONDERE VON WASSER**
DEVICE FOR FILTERING CONTAMINATED LIQUID, ESPECIALLY WATER
DISPOSITIF DE FILTRATION DE LIQUIDE SOUILLE, EN PARTICULIER D'EAU

(43) Veröffentlichungstag der Anmeldung: 18.06.2003
(73) Patentinhaber: Trüssel, Gerhard, 3455 Grünen (CH)
(72) Erfinder: Trüssel, Gerhard, 3455 Grünen (CH)
(74) Vertreter: Lusuardi, Werther Giovanni, Dr.
(86) Internationale Anmeldenummer: PCT/CH2000/000470
(87) Internationale Veröffentlichungsnummer: WO 2002/020122

(56) Entgegenhaltungen:
- WO-A-96/36416
- DE-A- 3 526 293
- DE-A- 4 217 411
- US-A- 5 490 924

## Beschreibung

Die Erfindung betrifft eine Vorrichtung zur Filtration von verunreinigter Flüssigkeit, insbesondere von Wasser gemäss dem Oberbegriff des Anspruchs 1 sowie ein Verfahren zur Filtration von verunreinigter Flüssigkeit nach dem Oberbegriff des Anspruchs 14.

Viele Flüssigkeiten, insbesondere auch Wasser, benötigen zu ihrer weiteren Verwendung eine Filtration. Speziell beim Reinigen von Teichen, Badeanlagen, oder Swimming-Pools muss je nach Anforderung an die Wasserqualität neben chemischen oder biologischen Reinigungsverfahren das Wasser mechanisch gereinigt werden. Speziell im Bereich von Bioteichen und Naturschwimmanlagen sind aber die chemischen Möglichkeiten einer Wasserreinigung nicht vorhanden. Daher kommt einer effizienten mechanischen Reinigungstechnik grosse Bedeutung zu.
Weiter sollte die Algenbildung besonders im Uferbereich der Badeanlage oder des Teiches abgesogen und vom Wasser getrennt werden können. Herkömmliche Reinigungsvorrichtungen erfüllen diese Forderung nur ungenügend. Grobreiniger wie Skimmer können nur relativ grosse Verunreinigungen wie Laub, Äste oder Steine ausfiltern. Herkömmliche Filtervorrichtungen für Algen und feine Partikel haben das Problem, dass der Filter nach kurzer Zeit verstopft ist und gereinigt werden muss. Zudem muss das Gerät auseinander genommen werden. Andere Systeme, die nur die Verunreinigungen absaugen haben, da sie ohne Filter betrieben werden, einen grossen Wasserverlust.

Hier will die Erfindung Abhilfe schaffen. Der Erfindung liegt die Aufgabe zugrunde, eine Vorrichtung und ein Verfahren zur Filtration von verunreinigter Flüssigkeit, insbesondere von Wasser zu schaffen, welche die obengenannten Nachteil vermeidet und einfach und kostengünstig im Betrieb sind.

Zur Lösung dieser Aufgabe ist die eingangs genannte Vorrichtung durch die Merkmale des kennzeichnenden Teils des unabhängigen Anspruchs 1 weitergebildet.

Damit ist der Vorteil erzielbar, dass eine kontinuierliche Reinigung des Filters der Vorrichtung möglich ist, so dass die Vorrichtung ohne Unterbrechung arbeiten kann. Ein weiterer Vorteil liegt darin begründet, dass die Reinigung des Filters mit geringstem Verlust an Flüssigkeit erfolgt. Bei der Filtration von Wasser kann das anfallende Schmutzwasser zur Bewässerung und Düngung einer allfällig vorhandenen Gartenanlage eingesetzt werden.

Bei einer bevorzugten Ausführungsform der erfindungsgemässen Vorrichtung ist die Anlage zur Reinigung des Filters mit mehreren Flüssigkeitsdüsen versehen, deren Strahl entgegen der Flüssigkeitsströmung in der Vorrichtung gegen den Filter gerichtet ist. Die Flüssigkeitsdüsen sind vorzugsweise als Flachstrahldüsen ausgebildet, deren Flachstrahlen sich beim Auftreffen auf den Filter überlappen, so dass eine optimale Reinigung des Filters erzielbar ist.
Der Filter ist vorzugsweise hohlkreiszylindrisch ausgebildet und die Flüssigkeitsdüsen sind auf einem koaxial zum Filter um die Zylinderachse drehbar angeordneten Karussell angebracht. Das Karussell umfasst vorzugsweise ein in der Zylinderachse liegendes Flüssigkeitsrohr mit Drehvorrichtung und mit einem Hochdruck-Anschluss, wobei die einzelnen Flüssigkeitsdüsen am Ende von radial aus dem Rohr austretenden Rohransätzen angebracht sind. Der kürzeste Abstand zwischen der Austrittsöffnung der Flüssigkeitsdüsen und dem Filter sollte im Bereich von 3 bis 7 cm, vorzugsweise von 4 bis 6 cm liegen. Der Eingangsdruck der Reinigungsflüssgkeit im Karussell beträgt zweckmässigerweise mindestens 50 Bar. Vorzugsweise beträgt der Eingangsdruck mindestens 100, im speziellen mindestens 190 Bar.

Bei einer weiteren Ausführungsform ist auf dem Karussell eine zusätzliche, vorzugsweise als Rundstrahldüse ausgebildete Flüssigkeitsdüse angebracht, deren Strahl tangential austritt, um das Karussell mittels seiner Rückstosskraft anzutreiben. Der Durchfluss durch die Flüssigkeitsdüse kann mittels eines über ein Einstellrad betätigbares Regulierventils variiert werden, um die Umschlaufgeschwindigkeit des Karussells zu verändern.
Dank des Antriebs mit dem Hochdruck des Karussells wird ausser der Pumpenleistung keine zusätzliche Energie zum Betrieb der erfindungsgemässen Vorrichtung benötigt.

Der Filter kann aus einem Metall oder aber auch aus einem Kunststoffgewebe, z.B. aus Nylon gefertigt sein. Der Filter weist vorzugsweise eine Porengrösse im Bereich von 25 bis 100 Mikron, im speziellen von 30 bis 50 Mikron auf.
Das Verhältnis der Volumina Va/Vi von äusserem und innerem Filterraum liegt zweckmässigerweise im Bereich von 1,25 bis 1,5, vorzugsweise von 1,3 bis 1,42.

Bei einer weiteren bevorzugten Ausführungsform der erfindungsgemässen Vorrichtung kann bei der Filtration von Wasser im Sauberwasserauslass eine im Ultraviolettbereich emittierende Lichtquelle nachgeschaltet sein, welche allfällig im Sauberwasser vorhandene Keime vernichtet.
An der höchsten Stelle der erfindungsgemässen Vorrichtung kann eine Flüssigkeitsstandssonde angebracht werden, um damit bei Erreichen des höchstmöglichen Flüssigkeitsstandes in der Vorrichtung den Flüssigkeitszufluss automatisch zu unterbrechen. Der Filter kann dann einer manuellen Reinigung unterworfen werden oder die Vorrichtung kann auch im Gegenstromverfahren betrieben werden, um den Filter von Verstopfungen zu befreien.

Die erfindungsgemässe Vorrichtung ist von einem Filterkasten druckdicht umschlossen. Der Betrieb der Vorrichtung erfolgt unter Druck im Bereich von 0,5 bis 2,0 Bar, d.h. der Druck im äusseren Filterraum ist um 0,5 bis 2,0 Bar höher als der Druck im inneren Filterraum.

Der Durchfluss durch das Filter von zu reinigender Flüssigkeit liegt je nach installierter Leistung der Vorrichtung im Bereich von 300 bis 800 Liter/Minute, vorzugsweise von 400 bis 600 Liter/Minute. Die Durchflussmenge an Reinigungsflüssigkeit durch die Flüssigkeitsdüsen liegt pro Stunde im Bereich von 180 bis 700 Liter, vorzugsweise von 250 bis 550 Liter. Das Verhältnis zwischen der Durchflussmenge der zu reinigenden Flüssigkeit und der Reinigungsflüssigkeit, welche aus dem Karussell tritt, liegt im Bereich von 1:30 bis 1:80, vorzugsweise von 1:45 bis 1:65.

Die Erfindung und Weiterbildungen der Erfindung werden im folgenden anhand der teilweise schematischen Darstellung eines Ausführungsbeispiels für die Filtration von Wasser noch näher erläutert.

Es zeigen:
- Fig. 1: eine schematische Darstellung der erfindungsgemässen Vorrichtung; und
- Fig. 2: eine perspektivische Darstellung der erfindungsgemässen Vorrichtung.

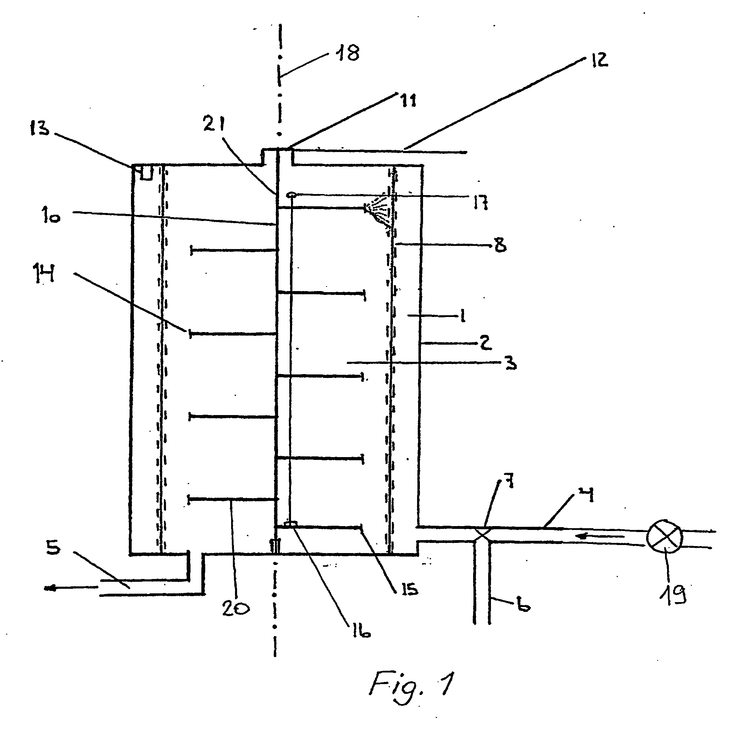

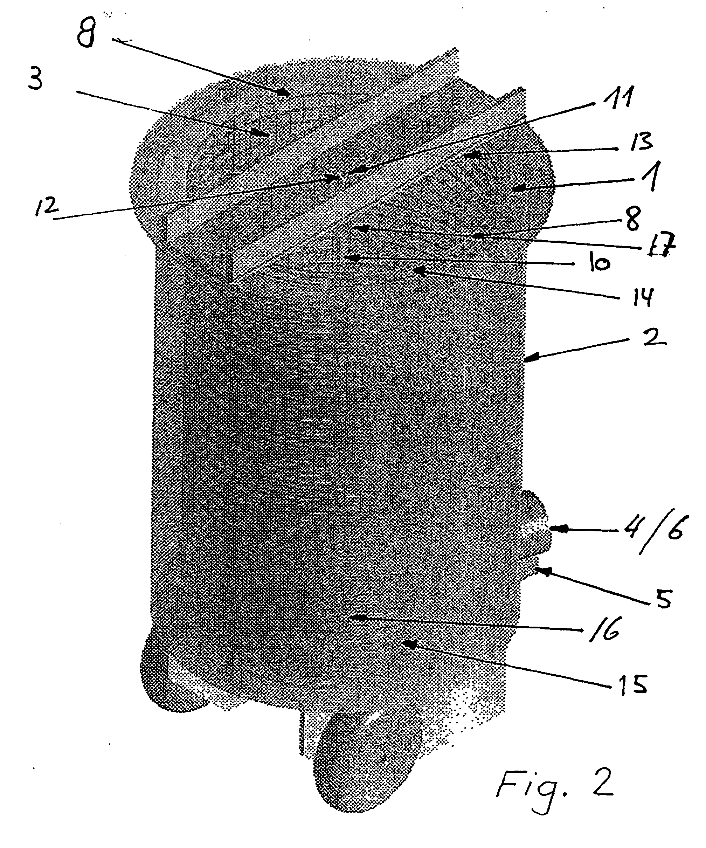

Wie in den Fig. 1 und 2 dargestellt wird das Schmutzwasser mittels einer Pumpe 19 durch den Schmutzwassereinlass 4 in den äusseren, zylindrischen Filterraum 1 gepumpt. Die Pumpe 19 sorgt für die Wasserzuführung zur Filteranlage und kann mit einem variablen Druck je nach einzusetzender Absaugvorrichtung (z.B. in Form einer Bürste u.s.w.) mit einem Druck von 0,5 bis 2,0 bar arbeiten. Vom äusseren Filterraum 1 aus dringt das Schmutzwasser durch den hohlzylindrisch angeordneten Filter 8 in den ebenfalls zylindrischen, inneren Filterraum 3. Die Porengrösse des Filters 8 bestimmt die Wasserqualität nach dem Filtervorgang; er beträgt bei diesem Ausführungsbeispiel 40 Mikron. Da das verschmutzte Wasser den Filter 8 sofort verschliessen würde, wird beim Beginn des Reinigungsvorgangs das Karussell 10 zwecks Hochdruckreinigung des Filters 8 in Betrieb genommen und eine Filtrierung für eine lange Zeitspanne gesichert. Das Karussell 10 umfasst ein in der Zylinderachse 18 liegendes Rohr 21 mit Drehvorrichtung 11 und einem Hochdruck-Anschluss 12, wobei die einzelnen Flüssigkeitsdüsen 14 am Ende von radial aus dem Rohr 21 austretenden Rohransätzen 20 angebracht sind.
Das gereinigte Wasser kann aus dem inneren Filterraum 3 durch den Sauberwasserauslass 5 dem System, welchem Schmutzwasser entnommen wurde, wieder zugeführt werden. Je nach Standort der Filteranlage oder den technischen Gegebenheiten muss das Sauberwasser mit einer Pumpe abgepumpt werden (hier nicht gezeichnet). Durch den Betrieb erhöht sich die Schmutz- und Algenkonzentration im äusseren Filterraum 1 stetig. Der Schmutzwasserstand im äusseren Filterraum 1 steigt an. Die Filterwirkung des Filters 8 nimmt dementsprechend ab. Beim Erreichen des maximalen Niveaus im äusseren Filterraum 1 wird durch die Wasserstandsonde 13 die Pumpe 19 ausgeschaltet. Das Karussell 10 dreht kontinuierlich weiter und filtert das im äusseren Filterraum 1 vorhandene Wasser auf eine minimale Menge aus. Durch Öffnen des Schmutzwasserablasses 6 wird das Schmutzwasser aus dem äusseren Filterraum 1 entleert und mit dem Karussell 10 wird der Filter 8 und der äussere Filterraum 1 gereinigt. Nach Beendigung des Reinigungsvorgangs der Filteranlage wird der Dreiweghahn 7 wieder in die Betriebsstellung gebracht und die Schmutzwasserreinigung läuft automatisch wieder an. Die notwendigen Schieberbewegungen können manuell oder automatisch gesteuert erfolgen.

Das Karussell 10 reinigt mit einem Eintrittsdruck in Karussell von 100 bis 190 Bar mittels der eingebauten Wasserdüsen 14, welche als Flachstrahldüsen ausgebildet sind, kontinuierlich den Filter 8 auf der ganzen Fläche. Mit der zuunterst abgewinkelt eingebauten, als Rundstrahldüse ausgebildeten zusätzlichen Wasserdüse 15 wird die Drehbewegung des Karussells durch die Rückstosskraft des aus der Rundstrahldüse austretenden Wassers erzeugt. Der Durchfluss durch die Flüssigkeitsdüse 15 kann mittels eines über ein Einstellrad 17 betätigbares Regulierventils 16 stufenlos variiert werden, um die Umschlaufgeschwindigkeit des Karussells 10 zu verändern.
Mit der stufenlos regulierbaren Drehzahl und dem stufenlos einstellbaren Wasserdruck im Karussell kann die optimalste Reinigungsleistung für die vorhandenen Verunreinigungen entsprechend eingestellt werden. Das Verhältnis zwischen gereinigtem Wasser und Wasserverbrauch zur Reinigung des Filters 8 liegt zwischen 1:50 und 1:57.

Durch Austauschen der Anschlussgamituren vom Schmutzwassereingang 4 zum Sauberwasserauslass 5 kann mit der gleichen Vorrichtung der Filter 8 im Schmutzwasserbereich abgereinigt werden. Der Arbeitsvorgang läuft dabei nach dem gleichen Prinzip ab.

## Patentansprüche

1. Vorrichtung zur Filtration von verunreinigten Flüssigkeiten, insbesondere von Wasser mit einem äusseren Filterraum (1), einem innerhalb des äusseren Filterraums (1) liegenden, inneren Filterraum (3), einem zwischen innerem und äusserem Filterraum (1;3) angeordneten Filter (8), einem in den äusseren Filterraum (1) mündenden Flüssigkeitseinlass (4) und einem aus dem inneren Filterraum (3) mündenden Flüssigkeitsauslass (5), wobei im inneren Filterraum (1) eine Anlage (10) zur Reinigung des Filters (8) untergebracht, welche mehrere Flüssigkeitsdüsen (14) umfasst, welche auf einem koaxial zum Filter (8) um die Zylinderachse (18) drehbar angeordneten Karussell (10) angebracht sind und deren Strahl gegen den Filter (8) gerichtet ist,
**dadurch gekennzeichnet, dass**
A) eine zusätzliche Flüssigkeitsdüse (15) auf dem Karussell (10) angebracht ist, deren Strahl tangential austritt, um das Karussell mittels seiner Rückstosskraft anzutreiben;
B) die Vorrichtung von einem Filterkasten (2) druckdicht umschlossen ist, derart dass,
C) sich der Druck im äusseren Filterraum (1) um 0,5 bis 2,0 Bar höher als der Druck im inneren Filterraum (3) ausbilden kann;
D) die Vorrichtung derart ausgebildet ist, dass der Durchfluss durch das Filter (8) von zu reinigender Flüssigkeit im Bereich von 300 bis 800 Liter/Minute liegt.

2. Vorrichtung nach Anspruch 1, **dadurch gekennzeichnet, dass** der Durchfluss durch die Flüssigkeitsdüse (15) mittels eines über ein Einstellrad (17) betätigbares Regulierventils (16) variiert werden kann, um die Umschlaufgeschwindigkeit des Karussells (10) zu verändern.

3. Vorrichtung nach Anspruch 1 oder 2, **dadurch gekennzeichnet, dass** die Flüssigkeitsdüsen (14) als Flachstrahldüsen ausgebildet sind, deren Flachstrahlen sich beim Auftreffen auf den Filter (8) vorzugsweise überlappen.

4. Vorrichtung nach einem der Ansprüche 1 bis 3, **dadurch gekennzeichnet, dass** der Filter (8) hohlkreiszylindrisch ausgebildet ist.

5. Vorrichtung nach einem der Ansprüche 1 bis 4, **dadurch gekennzeichnet, dass** das Karussell (10) ein in der Zylinderachse (18) liegendes Rohr (21) mit Drehvorrichtung (11) und einem Hochdruck-Anschluss (12) umfasst, wobei die einzelnen Flüssigkeitsdüsen (14) am Ende von radial aus dem Rohr (21) austretenden Rohransätzen (20) angebracht sind.

6. Vorrichtung nach einem der Ansprüche 1 bis 5 **dadurch gekennzeichnet, dass** der kürzeste Abstand zwischen der Austrittsöffnung der Flüssigkeitsdüsen (14) und dem Filter im Bereich von 3 bis 7 cm, vorzugsweise von 4 bis 6 cm liegt.

7. Vorrichtung nach einem der Ansprüche 1 bis 6, **dadurch gekennzeichnet, dass** der Filter (8) aus einem Metall oder aus einem Kunststoffgewebe gefertigt ist.

8. Vorrichtung nach einem der Ansprüche 1 bis 7, **dadurch gekennzeichnet, dass** der Filter (8) eine Porengrösse im Bereich von 25 bis 100 Mikron, vorzugsweise von 30 bis 50 Mikron aufweist.

9. Vorrichtung nach einem der Ansprüche 1 bis 8, **dadurch gekennzeichnet, dass** das Verhältnis der Volumina Va/Vi von äusserem und innerem Filterraum (1;3) im Bereich von 1,25 bis 1,5, vorzugsweise von 1,3 bis 1,42 liegt.

10. Vorrichtung nach einem der Ansprüche 1 bis 9, **dadurch gekennzeichnet, dass** im Flüssigkeitsauslass (5) eine im Ultraviolettbereich emittierende Lichtquelle nachgeschaltet ist.

11. Vorrichtung nach einem der Ansprüche 1 bis 10, **dadurch gekennzeichnet, dass** die zusätzliche Flüssigkeitsdüse (15) als Rundstrahldüse ausgebildet ist.

12. Vorrichtung nach einem der Ansprüche 1 bis 11, **dadurch gekennzeichnet, dass** an der höchsten Stelle der Vorrichtung eine Flüssigkeitssonde (13) angebracht ist.

13. Vorrichtung nach einem der Ansprüche 1 bis 12, **dadurch gekennzeichnet, dass** die Vorrichtung auf zwei Rollen beweglich gelagert ist.

14. Verfahren zur Filtration von verunreinigten Flüssigkeiten, insbesondere von Wasser, unter Verwendung einer Vorrichtung gemäss einem der Ansprüche 1 bis 13, wobei das zur Filtration der verunreinigten Flüssigkeit verwendete Filter (8) entgegen der Flüssigkeitsströmung mit einem aus einer Flüssigkeitsdüse (14) austretenden Strahl der gleichen Flüssigkeit kontinuierlich gereinigt wird und der Eingangsdruck der Flüssigkeit im Karussell (10) vorzugsweise mindestens 50 Bar beträgt,
**dadurch gekennzeichnet, dass**
A) der Druck im äusseren Filterraum (1) um 0,5 bis 2,0 Bar höher ist als der Druck im inneren Filterraum (3) und
B) der Durchfluss durch das Filter (8) von zu reinigender Flüssigkeit im Bereich von 300 bis 800 Liter/Minute liegt.

15. Verfahren nach Anspruch 14, **dadurch gekennzeichnet, dass** der Eingangsdruck im Karussell (10) mit der Flüssigkeitsdüse (14) mindestens 100 Bar, vorzugsweise mindestens 190 Bar beträgt.

16. Verfahren nach Anspruch 14 oder 15, **dadurch gekennzeichnet, dass** der Durchfluss durch das Filter (8) von zu reinigender Flüssigkeit im Bereich 400 bis 600 Liter/Minute liegt.

17. Verfahren nach einem der Ansprüche 14 bis 16, **dadurch gekennzeichnet, dass** die Durchflussmenge an Reinigungsflüssigkeit durch die Flüssigkeitsdüsen (14) pro Stunde im Bereich von 180 bis 700 Liter, vorzugsweise von 250 bis 550 Liter liegt.

18. Verfahren nach einem der Ansprüche 14 bis 17, **dadurch gekennzeichnet, dass** das Verhältnis zwischen der Durchflussmenge der zu reinigenden Flüssigkeit und der Reinigungsflüssigkeit im Bereich von 1:30 bis 1:80 liegt.

19. Verfahren nach Anspruch 18, **dadurch gekennzeichnet, dass** das Verhältnis zwischen der Durchflussmenge der zu reinigenden Flüssigkeit und der Reinigungsflüssigkeit im Bereich von 1:45 bis 1:65 liegt.

## Claims

1. Device for filtration of liquids containing impurities, specifically of water, with an external filter room (1) and an internal filter room 83) located within the external filer room (1), a filter (8) located between the external and the internal filter rooms (1, 3), a liquid inlet (4) leading into the external filter room (1) and a liquid outlet (5) leading out of the internal filter room (3), wherein a unit (10) for cleaning the filter (8) is positioned inside the internal filter room (3) which comprises several liquid nozzles (14), which are positioned on a carrousel (10) turning around the central axis (18) arranged coaxial to the filter (8) and from which the stream is directed against the filter (8),
**characterised in that**
A) an additional liquid nozzle (15) is attached to the carrousel (10), the stream from which exits tangentially and thereby propels the carrousel by means of recoil force;
B) the device is enclosed pressure-sealed by a filter box (2), so that
C) the pressure can be generated in the external filter room (1) so that it exceeds by 0.5 to 2.0 bar the pressure in the internal filter room (3),
D) the devices is designed so that the flow rate of liquid to be purified through the filter (8) lies in the range 300 to 800 litre/minute.

2. Device according to Claim 1, **characterised in that** the flow rate through the liquid nozzle (15) can be varied by means of a regulation valve (16) activated by means of an adjustment wheel (17) so that the rotating speed of the carrousel (10) can be adjusted as needed.

3. Device according to Claim 1 or Claim 2, **characterised in that** the liquid nozzles (14) are formed as flat-spray nozzles whose flat sprays preferably overlap when they hit the filter (8).

4. Device according to one of the claims 1 - 3, **characterised in that** the filter (8) is of hollow-cylindrical form.

5. Device according to one of the claims 1 - 4, **characterised in that** the carrousel (10) comprises a pipe (21) located in the cylinder axis (18) with swivel device (11) and a high-pressure connection (12), wherein the individual liquid nozzles (14) are attached at the end of a pipe fittings (2) exiting radially from the pipe (21).

6. Device according to one of the claims 1 - 5, **characterised in that** the shortest distance between the exit opening of the liquid nozzles (14) and the filter lies in the range 3 to 7 cm, preferably 4 to 6 cm.

7. Device according to one of the claims 1 - 6, **characterised in that** the filter (8) is made of a metal or a plastic tissue.

8. Device according to one of the claims 1 - 7, **characterised in that** the filter (8) has a pore size in the range 25 to 100 micrometer, preferably between 30 and 50 micrometer.

9. Device according to one of the claims 1 - 8, **characterised in that** the ratio between the volumes VaNi from the external and the internal filter room (1 ;3) lies in the range 1.25 to 1.5, preferably 1.3 to 1.42.

10. Device according to one of the claims 1 - 9, **characterised in that** a light source emitting ultraviolet light is positioned in the liquid outlet (5).

11. Device according to one of the claims 1 - 10, **characterised in that** the additional liquid nozzle (15) is formed as a round-spray nozzle.

12. Device according to one of the claims 1 - 11, **characterised in that** a liquid sensor (13) is positioned at the highest point of the device

13. Device according to one of the claims 1 - 12, **characterised in that** the device is positioned on two rollers.

14. Process for the filtration of liquids containing impurities, specifically of water, by means of a device in accordance with one of the claims 1 to 13, wherein the filter (8) used for filtration of the liquids containing impurities is constantly purified against the flow of the liquid with a stream of the same liquid emitted by a liquid nozzle (14) and wherein the input pressure of the liquid in the carrousel (10) preferably measures at least 50 bar,
**characterised in that**
A) the pressure in the external filter room (1) is exceeds the pressure in the internal filter room (3) by 0.5 to 2.0 bar and
B) the flow rate of liquid through the filter (8) of liquid to be purified lies in the range from 300 to 800 litre/minute.

15. Device according to Claim 14, **characterised in that** the input pressure in the carrousel (10) with the liquid nozzle (14) measures at least 100 bar, preferably at least 190 bar.

16. Device according to Claims 14 or Claim 15, **characterised in that** the flow rate of liquid through the filter (8) of the liquid to be purified lies in the range 400 to 600 litre/minute.

17. Device according to one of the claims 14 - 16, **characterised in that** the flow volume of cleansing liquid through the liquid nozzle (14) lies in the range of 180 to 700 litre per hour, preferably between 250 and 550 litre per hour.

18. Device according to one of the claims 14 - 17, **characterised in that** the ratio between the flow volume of liquid to be purified and the cleansing liquid lies in the range 1:30 to 1:80.

19. Device according to Claim 18, **characterised in that** the ratio between the flow volume of liquid to be purified and the cleansing liquid lies in the range 1:45 to 1:65.

## Revendications

1. Dispositif de filtration de liquides souillés, notamment d'eau, avec une chambre de filtration externe (1), une chambre de filtration interne (3) située dans la chambre de filtration externe (1), un filtre (8) placé entre les chambres de filtration externe et interne (1;3), une entrée de liquide (4) débouchant dans la chambre de filtration externe (1) et une sortie de liquide (5) débouchant de la chambre de filtration interne (3), la chambre de filtation interne (1) renfermant une unité (10) de nettoyage du filtre (8), celle-ci comprenant plusieurs buses de liquide (14) qui sont placées sur un tourniquet (10) coaxial par rapport au filtre (8) et mobile autour de l'axe du cylindre (18) et dont le jet est orienté en direction du filtre (8),
**caractérisé en ce que**
A) une buse de liquide supplémentaire (15) placée sur le tourniquet (10) présente un jet sortant tangentiellement, afin d'entraîner le tourniquet grâce à sa force de recul;
B) le dispositif est enfermé dans un caisson de filtre (2) étanche à la pression, de telle sorte que
C) la pression qui se développe dans la chambre de filtration externe (1) peut être supérieure de 0,5 à 2,0 bars à la pression dans la chambre de filtration interne (3);
D) le dispositif est conçu de telle sorte que le débit du liquide à nettoyer dans le filtre (8) se situe entre 300 et 800 litres/minute.

2. Dispositif selon la revendication 1, **caractérisé en ce qu'**une soupape de réglage (16) pouvant être actionnée par une molette de réglage (17) permet de faire varier le débit dans la buse de liquide (15), afin de modifier la vitesse de rotation du tourniquet (10).

3. Dispositif selon la revendication 1 ou 2, **caractérisé en ce que** les buses de liquide (14) ont la forme de buses à jet plat dont les jets plats se superposent de préférence lorsqu'ils touchent le filtre (8).

4. Dispositif selon une des revendications 1 à 3, **caractérisé en ce que** le filtre (8) est creux, cylindrique et circulaire.

5. Dispositif selon une des revendications 1 à 4, **caractérisé en ce que** le tourniquet (10) comprend un tube (21) situé dans l'axe du cylindre (18) avec un mécanisme vireur (11) et un raccord haute pression (12), chaque buse de liquide (14) étant placée sur l'extrémité d'ajutages (20) sortant radialement du tube (21).

6. Dispositif selon une des revendications 1 à 5, **caractérisé en ce que** la plus faible distance entre l'orifice de sortie des buses de liquide (14) et le filtre doit être comprise entre 3 et 7 cm, de préférence entre 4 et 6 cm.

7. Dispositif selon une des revendications 1 à 6, **caractérisé en ce que** le filtre (8) est fabriqué en métal ou en tissu synthétique.

8. Dispositif selon une des revendications 1 à 7, **caractérisé en ce que** le filtre (8) présente des pores dont la taille se situe entre 25 et 100 microns, de préférence entre 30 et 50 microns.

9. Dispositif selon une des revendications 1 à 8, **caractérisé en ce que** le rapport entre les volumes Va/Vi des chambres de filtration externe et interne (1;3) est compris entre 1,25 et 1,5, de préférence entre 1,3 et 1,42.

10. Dispositif selon une des revendications 1 à 9, **caractérisé en ce qu'**une source lumineuse qui émet dans l'ultraviolet est montée en aval dans la sortie de liquide (5).

11. Dispositif selon une des revendications 1 à 10, **caractérisé en ce que** la buse de liquide supplémentaire (15) a la forme d'une buse à jet rond.

12. Dispositif selon une des revendications 1 à 11, **caractérisé en ce qu'**un détecteur de niveau (13) est placé sur le point le plus élevé du dispositif.

13. Dispositif selon une des revendications 1 à 12, **caractérisé en ce que** le dispositif est mobile sur deux roulettes.

14. Méthode de filtration de liquides souillés, notamment d'eau, en utilisant un dispositif selon une des revendications 1 à 13, le filtre (8) utilisé pour la filtration du liquide souillé étant nettoyé continuellement en sens inverse de la circulation du liquide, par un jet du même liquide émis par une buse de liquide (14), et la pression d'alimentation dans le tourniquet (10) étant d'au moins 50 bars de préférence,
**caractérisée en ce que**
A) la pression dans la chambre de filtration externe (1) est supérieure de 0,5 à 2,0 bars à la pression dans la chambre de filtration interne (3) et **en ce que**
B) le débit du liquide à nettoyer dans le filtre (8) se situe entre 300 et 800 litres/minute.

15. Méthode selon la revendication 14, **caractérisée en ce que** la pression d'alimentation dans le tourniquet (10) avec la buse de liquide (14) est d'au moins 100 bars, de préférence 190 bars.

16. Méthode selon la revendication 14 ou 15, **caractérisée en ce que** le débit du liquide à nettoyer dans le filtre (8) se situe entre 400 et 600 litres/minute.

17. Méthode selon une des revendications 14 à 16, **caractérisée en ce que** le débit horaire de liquide nettoyant dans les buses de liquide (14) se situe entre 180 et 700 litres, de préférence entre 250 et 550 litres.

18. Méthode selon une des revendications 14 à 17, **caractérisée en ce que** le rapport entre le débit du liquide à nettoyer et du liquide de nettoyage est compris entre 1:30 et 1:80.

19. Méthode selon la revendication 18, **caractérisée en ce que** le rapport entre le débit du liquide à nettoyer et du liquide de nettoyage est compris entre 1:45 et 1:65.
